# EUROPÄISCHE PATENTSCHRIFT

(11) **EP 3 777 623 B1**
(45) Veröffentlichungstag und Bekanntmachung des Hinweises auf die Patenterteilung: **23.08.2023**
(21) Anmeldenummer: 20186860.1
(22) Anmeldetag: 21.07.2020
(51) Int. Cl.: A47K 3/00

(54) **DICHTUNGSWANNE-ELEMENT ZUR ABDICHTUNG EINER BADE- ODER DUSCHWANNENECKE GEGENÜBER EINEM GEBÄUDETEIL**
SEALING TUB ELEMENT FOR SEALING OF A BATH OR SHOWER CORNER RELATIVE TO A BUILDING PART
ÉLÉMENT DE BAC D'ÉTANCHÉITÉ POUR ÉTANCHÉIFIER UN ANGLE DE BAIGNOIRE OU DE DOUCHE PAR RAPPORT À UNE PARTIE DU BÂTIMENT

(30) Priorität: 14.08.2019 CH 10132019
(43) Veröffentlichungstag der Anmeldung: 17.02.2021
(73) Patentinhaber: Sanipat GmbH, 6045 Meggen (CH)
(72) Erfinder: Gassmann, Urs, 6343 Buonas (CH)
(74) Vertreter: Prins Intellectual Property AG

(56) Entgegenhaltungen:
- EP-A1- 2 604 160
- DE-A1-102014 103 206

## Beschreibung

### Technisches Gebiet

Die Erfindung betrifft ein Wanneneckdichtelement zur Abdichtung einer Bade- oder Duschwannenecke gegenüber einem Gebäudeteil und einer Anschlussfläche eines Wannenträgers oder einer Frontblende.

### Technischer Hintergrund

Im Sanitärbereich werden zur Abdichtung bei Bade- oder Duschwannen sogenannte Wannen- oder Zargendichtbänder eingesetzt. Ein solches Dicht- und Montageband ist beispielsweise aus EP2405067 derselben Anmelderin bekannt. Diese Dicht- und Montagebänder werden üblicherweise mit einem ersten bzw. unteren Bereich am Wannenrand und mit einem zweiten bzw. oberen Bereich am Gebäudeteil z.B. einer Anschlusswand wasserdicht befestigt. Die Anschlusswand wird dann üblicherweise mit Fliesen versehen. Die Fuge zwischen den Fliesen und dem Wannenrand wird mit einer elastischen Dichtmasse (meist Silikon) versehen. Das hinter dieser sogenannten Silikonfuge liegende Dicht- und Montageband verhindert ein Eindringen von Feuchtigkeit und Wasser hinter die Bade- oder Duschwanne auch bei defekter Silikonfuge. Um eine Beschädigung der Dichtung beim Ersetzen von defekten Silikonfugen zu vermeiden, wurde das Dicht- und Montageband aus EP2405067 erstmals mit einem Schnittschutz versehen.

Das Dicht- und Montageband aus EP2405067 ist zudem geeignet, um Eckbereiche bei Wand-Wand-Übergängen zuverlässig abzudichten. Für andere komplexere Eckbereich-Situationen wie bei Boden-Wand- oder Boden-Boden-Übergängen, bei denen das Dicht- und Montageband eingeschnitten wird, sind zum Beispiel aus EP2570062, EP2604160, EP3150093 und EP3363338 starre oder flexible Eckprofile oder Dichtecken bekannt.

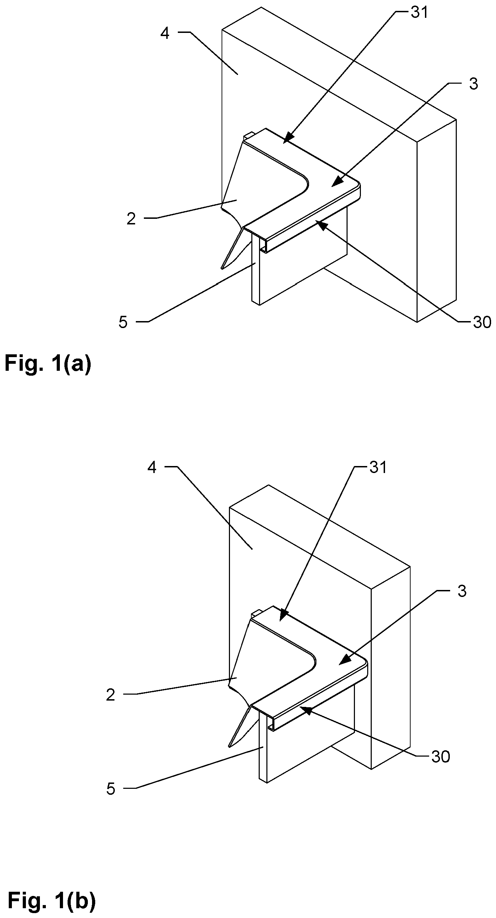

Bei einer sehr häufig vorkommenden Einbausituation von Bade- oder Duschwannen erstreckt sich die Anschlusswand entlang einem gebäudeseitigen Wannenrand über die Wannenecke hinaus (vgl. Fig. 1(a)) oder schliesst bei der Wannenecke bündig mit einem freistehenden Wannenrand ab (Fig. 1(b)).

Bei diesen beiden Einbausituationen mit teilweise freistehender Wannenecke werden die herkömmlichen Dichtbänder ebenfalls eingeschnitten, in die Ecken unter dem Wannenrand verlegt und die dabei entstehenden Einschnittslöcher werden mit einer Dichtmasse bestrichen. Dieses Vorgehen ist jedoch arbeitsintensiv und fehleranfällig. Denn obwohl in diesen Fällen der Dichtbereich unterhalb des Wannenrand weniger durch Spritzwasser belastet ist, hat sich nun gezeigt, dass die bekannten Bänder und Dichtecken nicht ausreichen, um eine genügende Dichtung zu erreichen. Der Grund dafür liegt darin, dass bei der auf einem Wannenträger montiert eingebauten Wanne im fertig montierten Zustand hinter der Silikonfuge üblicherweise ein kleiner Hohlraum vorhanden ist, der sich entlang dem Wannenrand bis an die Wannenecke zwischen gebäudeseitigem und freistehendem Wannenrand erstreckt. Die Silikonfuge läuft entlang der Unterseite des Wannenrands zwischen den an einer Front- oder Trägerplatte des Wannenträgers angebrachten Aussenverkleidung resp. Fliesen und dem Wannenrand weiter. Das gleiche gilt für den hinter der Silikonfuge ausgebildeten Hohlraum. Ist nun eine Silikonfuge an der Oberseite des Wannenrands defekt, kann Wasser in diesen Hohlraum eintreten und entlang der Oberseite des gebäudeseitigen Wannenrands bis an die Unterseite des Wannenrands in der Wannenecke fliessen. Bereits eine leicht fehlerhafte Dichtung, die wie oben beschrieben erstellt wurde, birgt daher die Gefahr, dass Wasser hinter die Wanne eindringen kann.

Ein Beispiel für einen Wannenträger mit Frontplatte ist aus EP3387971 der gleichen Anmelderin bekannt.

Zudem ist aus der DE 102014103206 A1 eine Dichtanordnung zur Abdichtung eines Wannenrandes beschrieben. Diese umfasst eine gekrümmte Fläche, die passend an eine Mauer und/oder an einen Wannenrand angebracht werden kann. Auch das dafür verwendete Eckelement weist an seiner Ecke ein Loch auf.

### Darstellung der Erfindung

Eine Aufgabe der Erfindung ist es, die Dichtung in Eckbereichen mit freistehenden Wannenrändern zu verbessern.

Diese Aufgabe wird durch ein Wanneneckdichtelement und der Verwendung des Wanneneckdichtelements gemäss den unabhängigen Ansprüchen gelöst. Bevorzugte Ausführungsarten der Erfindung sind in den abhängigen Ansprüchen angegeben.

Das Wanneneckdichtelement zur Abdichtung einer Bade- oder Duschwannenecke gegenüber einem Gebäudeteil (resp. einer Anschlussfläche oder Anschlusswand eines Gebäudeteils) und einem Wannenträger (resp. einer Anschlussfläche des Wannenträgers, beispielsweise einer Frontplatte des Wannenträgers wie sie z.B. aus EP3387971A1 bekannt ist) oder einer Frontblende weist ein flächiges, wasserdichtes Basisdichtteil und ein wasserdichtes, rechtwinkliges Wannendichtteil. Das Basisdichtteil weist eine wannenseitige Oberfläche zur dichten Verbindung mit einer Anschlussfläche einer Bade- oder Duschwanne und eine gebäudeseitige Oberfläche zur dichten Verbindung mit dem Gebäudeteil auf. Das Wannendichtteil umfasst einen ebenen Wannenrandschenkel, der eine Wannenranddichtfläche zur dichten Verbindung mit einer unteren Anschlussfläche eines Wannenrands aufweist, und einen ebenen Wannenträgerschenkel, der eine Wannenträgerdichtfläche zur dichten Verbindung mit der Anschlussfläche des Wannenträgers aufweist. Wannenrandschenkel und Wannenträgerschenkel sind wasserdicht miteinander verbunden und schliessen mit den von den Dichtflächen abgewandten Seiten einen rechten Winkel ein. Eine Stirnseite des Wannenrandschenkels und eine Stirnseite des Wannenträgerschenkels sind wasserdicht mit einer Wannenseite des flächigen Basisdichtteils verbunden. Das flächige Basisdichtteil erstreckt sich in einem ebenen Zustand in Bezug auf eine durch den Wannenrandschenkel und den Wannenträgerschenkel ausgebildete Ecke des Wannendichtteils auf der Seite der Wannenranddichtfläche des Wannenrandschenkels und auf der entgegengesetzten Seite der Wannenträgerdichtfläche des Wannenträgerschenkels um eine vorbestimmte - für eine dichte Verbindung geeignete - Mindestlänge, vorzugsweise um mindestens fünf Zentimeter, erstreckt. In anderen Worten erstreckt sich das Basisdichtteil über mindestens drei Viertel resp. 270 Grad in Bezug auf die Ecke des Wannendichtteils, wobei sich das Basisteil im Bereich (Viertel), der zwischen gebäudeseitigem Wannenträger und dem Gebäudeteil zu liegen käme, nicht zwingend erstrecken muss.

Im erfindungsgemässen Wanneneckdichtelement erstreckt sich der Wannenrandschenkel auf der der Wannenträgerdichtfläche abgewandten Seite des Wannenträgerschenkels entlang dessen Gesamtlänge.

Im Einbauzustand ist das Wanneneckdichtelement im Eckbereich der Wanne mit dem Wannenrandschenkel an einer Unterseite des freistehenden und ggf. des gebäudeseitigen Wannenrands und mit dem Wannenträgerschenkel an einer Anschlussfläche des Wannenträgers wasserdicht befestigt, so dass ein Teil der wannenseitigen Oberfläche des Basisdichtteils am gebäudeseitigen Wannenrand oder an einem daran befestigten Wannendichtband wasserdicht befestigt ist. Die gebäudeseitige Oberfläche des Basisdichtteils ist mit dem Gebäudeteil wasserdicht verbunden. Auf diese Weise ist hinter einer um die Wannenecke verlaufende Silikonfuge rundherum eine zuverlässige Dichtung vorhanden, und Wasser, welches in den Hohlraum hinter der Silikonfuge eintritt, kann nicht mehr hinter die Bade- oder Duschwanne gelangen. Zudem wird die Abdichtung einer Bade- oder Duschwanne gegenüber einem Gebäudeteil und einem Wannenträger massgeblich vereinfacht, was sich in kürzeren Montagezeiten wiederspiegelt.

Das wasserdichte Grundmaterial des Basisdichtteils und/oder des Wannendichtteils kann eine Folie oder ein Schaumstoff sein. Das Grundmaterial kann elastisch oder plastisch dehnbar oder nicht dehnbar sein.

In einigen Ausführungsformen und je nach Einbausituation ist der Wannenrandschenkel L-förmig ausgebildet ist und ein erster Abschnitt des Wannenrandschenkel erstreckt sich auf der der Wannenträgerdichtfläche abgewandten Seite des Wannenträgerschenkels entlang dessen Gesamtlänge erstreckt und dass ein zweiter Abschnitt des Wannenrandschenkels sich auf der Seite der Wannenträgerdichtfläche entlang des Basisdichtteils erstreckt. Dabei ist lediglich die Stirnfläche des zweiten Abschnitts wasserdicht mit dem Basisdichtteil verbunden.

In einigen Ausführungsformen kann der Wannenträgerschenkel des Wannendichtteils eine Länge von etwa fünf oder mehr Zentimeter aufweisen. In der Regel sind mindestens fünf Zentimeter von gewissen Baunormen gefordert, um eine genügend grosse Auflage- resp. Dichtfläche zu erhalten.

In einigen Ausführungsformen kann das Wannendichtteil wannenseitig, d.h. auf der Wannendichtfläche des Wannenrandschenkels und auf der Wannenträgerdichtfläche des Wannenträgerschenkels, einen Kleber, vorzugsweise einen Butylkleber, aufweisen. Mit wannenseitig ist die Seite des Wannendichtteils gemeint, die im bestimmungsgemässen Einbauzustand dem Wannenrand und/oder dem Wannenträger zugewandt ist und damit wasserdicht verbunden ist. Der Butylkleber hat den Vorteil, dass er allfällige Rundungen an Wannenkanten gut abdichtet, insbesondere wenn er mit einer Dicke von etwa 0,5 bis 1,0 Millimeter aufgetragen ist.

In einigen Ausführungsformen kann das Wannendichtteil fliesenseitig kleberfrei sein. Mit fliesenseitig ist die Seite des Wannendichtteils gemeint, die im bestimmungsgemässen Einbauzustand dem Wannenrand und/oder dem Wannenträger abgewandt ist und auf deren Seite in der Regel Fliesen oder sonstige Verkleidungselemente angebracht werden. Um eine bessere Oberfläche für das Anbringen von Fliesen zu erhalten, kann das Wannendichtteil fliesenseitig eine haftvermittelnde Struktur, z.B. eine Vlieslage, aufweisen.

In einigen Ausführungsformen kann das Grundmaterial des Basisdichtteils und/oder des Wannendichtteils aus selbstklebendem Material gefertigt sein, welches in den Bereichen, die im Einbauzustand mit Fliesen bedeckt sind, eine nicht-klebende, aber haftvermittelnde Struktur, z.B. eine Vlieslage, aufweist.

In einigen Ausführungsformen kann der Wannenrandschenkel eine Breite von mindestens 1,5 Zentimeter aufweisen und/oder der Wannenträgerschenkel eine Breite von mindestens fünf Zentimeter aufweist. Die Breite des Wannenrandschenkels ist in der Regel an die Breite der Unterseite des Wannenrands angepasst, welche bei den meisten Wannen 1,5 bis 2,0 Zentimeter beträgt.

In einigen Ausführungsformen kann das Basisdichtteil an der gebäudeseitigen Oberfläche einen Kleber, vorzugsweise einen Butylkleber, aufweisen.

In einigen Ausführungsformen kann das Basisdichtteil auf der wannenseitigen Oberfläche in dem Abschnitt, welcher wannenseitig in Bezug auf das Wannendichtteil ausgebildet ist, einen Kleber, vorzugsweise einen Butylkleber, aufweisen. Alternativ oder zusätzlich kann das Basisdichtteil auf der wannenseitigen Oberfläche in dem Abschnitt, welcher fliesenseitig in Bezug auf das Wannendichtteil ausgebildet ist, eine haftvermittelnde Struktur, z.B. eine Vlieslage, aufweist. In anderen Worten kann der Abschnitt des Basisdichtteils, welcher im Einbauzustand mit der Wanne oder einem Dicht- und Montageband verbunden ist oder zwischen Wanne und Gebäudewand liegt, an der wannenseitigen Oberfläche den Kleber aufweisen. Der Abschnitt, welcher seitliche über die Wanne resp. den Wannenträger herausragt und in der Regel mit Fliesen oder dergleichen belegt wird, kann auf der wannenseitigen Oberfläche die haftvermittelnde Struktur, z.B. eine Vlieslage, aufweisen.

In einigen Ausführungsformen kann das Basisdichtteil und/oder das Wannendichtteil aus einer wasserdichten, flexiblen Folie ausgebildet sein. Diese kann wie oben beschrieben mit dem Kleber und/oder der haftvermittelnden Struktur versehen sein.

In einigen Ausführungsformen kann die Ecke des Wannendichtteils etwa mittig auf dem Basisdichtteil angeordnet sein.

In einigen Ausführungsformen sind die Bereiche, welche im Einbauzustand hinter Silikonfugen zu liegen kommen, mit einem Schnittschutzstreifen versehen, um das Wanneneckdichtelement bei einem allfälligen Ersetzen der Silikonfuge, vor Beschädigungen zu schützen. Ein solcher Schnittschutzstreifen ist beispielsweise aus EP2405067 bekannt. Der Schnittschutz kann in dem Wanneneckdichtelement integriert sein oder als separates Element vor oder während dem Einbau am Wanneneckdichtelement angeordnet werden.

Die Offenbarung betrifft weiter einen Bausatz für ein Wanneneckdichtelement, wobei der Bausatz ein wasserdichtes Basisdichtteil und ein wasserdichtes Wannendichtteil umfasst, die derart vorgefertigt sind, dass sie für den Einbau wasserdicht verbindbar sind.

Der Bausatz kann weiter einen Kleber, vorzugsweise einen Butylkleber, z.B. in Form eines Abdeckfolien angeordneten Butylkleberbands, umfassen, welcher bei Bedarf auf den gewünschten Flächen des Basisdichtteils und/oder des Wannendichtteils aufgebracht wird. Der Bausatz kann zusätzlich einen Schnittschutzstreifen umfassen, welcher in den Bereichen des Wanneneckdichtelements angebracht werden kann, die im Einbauzustand hinter den Silikonfugen liegen.

Die Erfindung betrifft weiter die Verwendung eines Wanneneckdichtelements zur Abdichtung einer Bade- oder Duschwannenecke gegenüber einer gebäudeseitigen Anschlussfläche und einer Anschlussfläche, z.B. eine Front- oder Trägerplatte, des Wannenträgers.

Das Wanneneckdichtelement wird dabei im Bereich einer Wannenecke zwischen gebäudeseitigem und freistehendem Wannenrand angebracht. Der Wannenrandschenkel wird wasserdicht mit einer Unterseite des freistehenden Wannenrands und der Wannenträgerschenkel wird wasserdicht mit einem die Bade- oder Duschwanne stützenden Wannenträger verbunden. Das Basisdichtteil wird mit der wannenseitigen Oberfläche wasserdicht mit dem gebäudeseitigen Wannenrand oder einem daran befestigten Dicht- und Montageband verbunden. Das Basisdichtteil wird mit der gebäudeseitigen Oberfläche an der Anschlusswand bei der Wannenecke bündig mit dem freistehenden Wannenrand abschliesst, wird der Abschnitt, welcher nicht zwischen Wanne und Gebäude liegt, um die Ecke der Anschlusswand gelegt.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: unter (a) und (b) eine erste respektive zweite Einbausituation einer Bade- oder Duschwanne;
- Fig. 2: eine perspektivische Ansicht einer Einbausituation mit Dicht- und Montageband;
- Fig. 3: unter (a) und (b) je eine perspektivische Ansicht und unter (c) und (d) je eine Draufsicht eines Wanneneckdichtelements;
- Fig. 4: unter (a) und (b) das Wanneneckdichtelement in der ersten respektive zweiten Einbausituation aus Fig. 1.
- Fig. 5: eine dritte Einbausituation einer Bade- oder Duschwanne;
- Fig. 6: ein Wanneneckdichtelement in der dritten Einbausituation aus Fig. 5;
- Fig. 7: eine perspektivische Ansicht eines Wanneneckdichtelements für die dritte Einbausituation aus Fig. 5;
- Fig. 8: eine perspektivische Ansicht eines Wanneneckdichtelements für die dritte Einbausituation aus Fig. 5;
- Fig. 9: eine Draufsicht auf ein Wanneneckdichtelement aus Fig. 7 oder 8; und
- Fig. 10: eine Draufsicht auf ein Wanneneckdichtelement aus Fig. 7 oder 8.

### Wege zur Ausführung der Erfindung

Beim Einbau einer Bade- oder Duschwanne wird die Rundungen der Wannenecken, die in Ecken der Gebäudeteile zu liegen kommen, vor dem Anbringen des Dicht- und Montagebands mittels einem an die Rundung der Wannenecke angepasstem oder anpassbarem Eckstück ausgeglichen. Anschliessend wird ein Dicht- und Montageband mit einem ersten, unteren Bereich an den Wannenrand der Wanne resp. dessen Abbordung geklebt. Ein zweiter, oberer Bereich wird an eine Anschlusswand oder an einen Anschlussboden geklebt. In Boden-Boden-Eckbereichen zwischen zwei Anschlussböden oder bei Wand-Boden-Übergängen von einer Anschlusswand zu einem Anschlussboden muss das herkömmliche Dicht- und Montageband eingeschnitten werden. Um diese Bereiche dennoch zuverlässig abzudichten, werden angepasste oder anpassbare Abdichtprofile oder -elemente verwendet, welche die Gestaltung des Eckbereichs bzw. des Übergangs abbilden und mit dem darunterliegenden Dicht- und Montageband überlappend und dichtend verbunden werden.

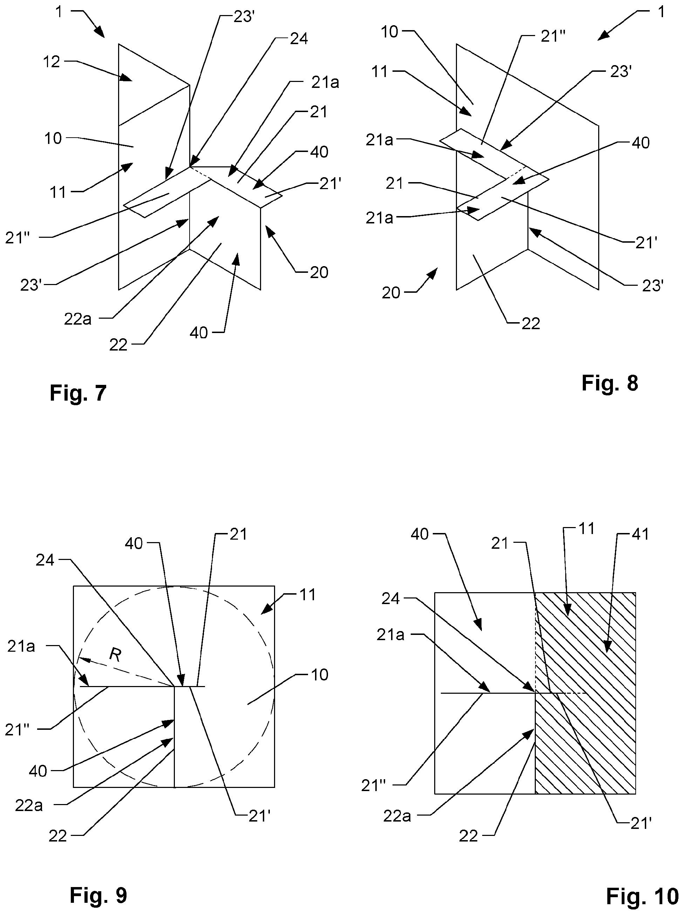

Fig. 1 zeigt zwei häufig vorkommende Einbausituationen für auf einem Wannenträger 5 montierte Bade- oder Duschwannen 2 bei denen sich einerseits die Anschlusswand 4 entlang einem gebäudeseitigen Wannenrand 31 über die Wannenecke 3 hinaus erstreckt (Fig. 1(a)) oder die Anschlusswand 4 bei der Wannenecke 3 bündig mit einem freistehenden Wannenrand 30 abschliesst (Fig. 1(b)). In Figur 8 ist eine dritte Einbausituation gezeigt, bei der der freistehende Wannenrand 30 über die Anschlusswand 4 hervorsteht und der Wannenträger 5 mit der Anschlusswand 4 fluchtet. In den Figuren ist jeweils lediglich die Wannenecke 3 von der Bade- oder Duschwanne 2 und ein Ausschnitt des Wannenträgers 5 und der Anschlusswand 4 dargestellt.

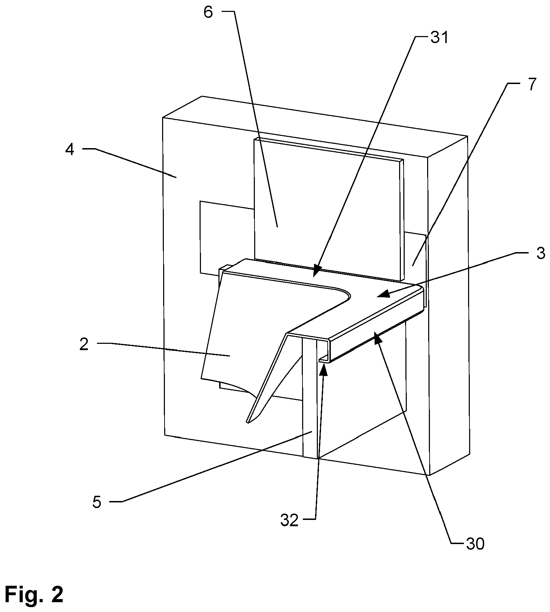

In Fig. 2 ist eine perspektivische Ansicht der Einbausituation von Fig. 1(a) dargestellt. Dabei ist der gebäudeseitige Wannenrand 31 mit einem Dicht- und Montageband 7 gegenüber der Anschlusswand 4 abgedichtet. Ebenfalls dargestellt ist eine an der Anschlusswand 4 angebrachte Fliese 6. Eine Fuge zwischen gebäudeseitigem Wannenrand 31 und Fliese 6 ist mit einer elastischen Dichtmasse (meist Silikon) versehen. Wird eine solche Silikonfuge undicht, so kann Wasser, welches in einen Hohlraum hinter der Silikonfuge eindringt entlang dem gebäudeseitigen Wannenrand 31 bis an die Wannenecke 3 und an der Unterseite des Wannenrands hinter die Wanne oder hinter am Wannenträger 5 angebrachte Fliesen gelangen.

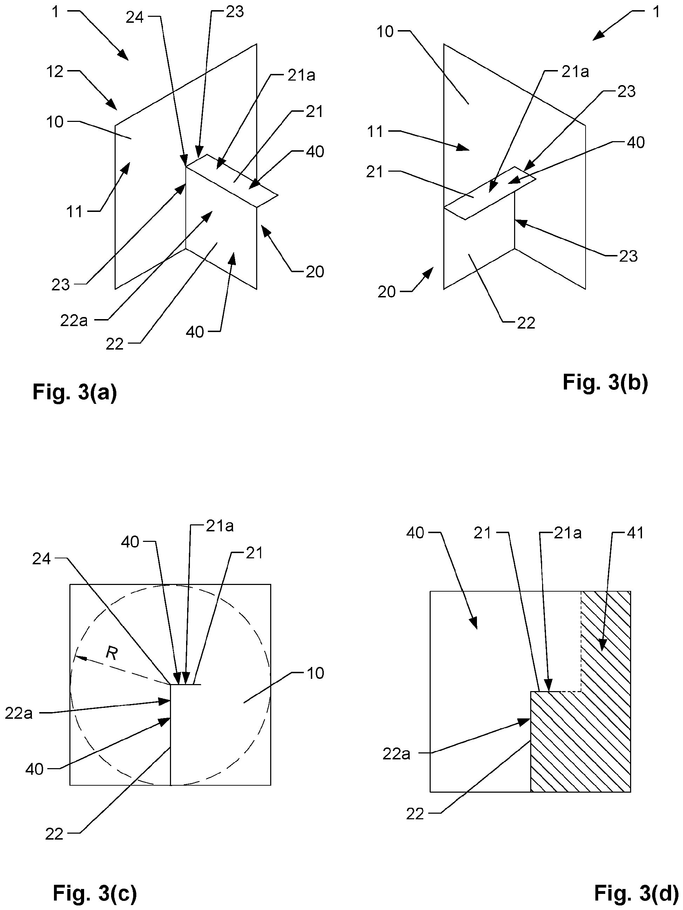

Fig. 3 zeigt unter (a) und (b) jeweils eine perspektivische Ansicht eines Wanneneckdichtelements 1 und unter (c) eine Draufsicht auf eine Wannenseite 11 des Wanneneckdichtelements 1. Das Wanneneckdichtelement 1 weist ein wasserdichtes, flächiges Basisdichtteil 10 und ein wasserdichtes Wannendichtteil 20 auf. Das Basisdichtteil 10 hat eine wannenseitige Oberfläche 11 und eine gebäudeseitige Oberfläche 12, wobei in Fig. 3 eine Ansicht auf die wannenseitige Oberfläche 11 dargestellt ist. Das Wannendichtteil 20 weist einen Wannenrandschenkel 21 und einen Wannenträgerschenkel 22 auf, die rechtwinklig zueinanderstehen und zusammen eine Stirnseite 23 des Wannendichtteils 20 ausbilden. Mit anderen Worten schliessen die jeweils der Wanne abgewandten Seiten der beiden Schenkel einen rechten Winkel ein. Das Wannendichtteil 20 ist senkrecht auf der wannenseitigen Oberfläche 11 des Basisdichtteils 10 angeordnet und mit diesem über die Stirnseite 23 wasserdicht verbunden. Eine stirnseitige Ecke 24 des Wannendichtteils 20, d.h. der stirnseitige Scheitelpunkt zwischen den beiden Schenkeln, ist derart auf dem flächigen Basisdichtteil 10 angeordnet, dass sich dieses in einem ebenen Zustand in Bezug auf die Ecke 24 in alle Richtungen R um einen vorbestimmten Mindestabstand, vorzugsweise mindestens fünf Zentimeter erstreckt (dargestellt mit einem strichlinierten Kreis).

Das Wannendichtteil 20 hat vorzugsweise eine Länge (Richtung senkrecht zum Basisteil) von mindestens fünf Zentimeter. Die Breite des Wannenträgerschenkels ist vorzugsweise mindestens fünf Zentimeter. Die Breite des Wannenrandschenkels 21 ist vorzugsweise an die Breite der Unterseite 32 eines Wannenrands 30, 31 angepasst. In der Regel ist die Breite des Wannenrandschenkels 21 etwa 1,5 bis 2,0 Zentimeter.

Zur Befestigung des Wanneneckdichtelements 1 an der Bade- oder Duschwanne 2, weisen die jeweils der Wanne zuwandten Seiten des Wanneneckdichtelements 1, d.h. auf der wannenseitigen Oberfläche, einen Kleber 40 auf, welcher in der Regel eine Butylkleberschicht ist, die sich leicht an Unebenheiten anpasst und eine zuverlässige und dauerhafte Abdichtung erlaubt.

Beim Wannendichtteil 20 ist entsprechend die "äussere" Oberfläche mit dem Kleber 40 versehen, welche nicht von den beiden Schenkeln 21, 22 eingeschlossen wird (vgl. sichtbare Flächen in Fig. 3(a)). D.h. beim Wannenträgerschenkel 22 ist die Wannenträgerdichtfläche 22a, welche im Einbauzustand am Wannenträger 5 befestigt wird, und beim oberen und weniger breiten Wannenrandschenkel 20 die Wannenranddichtfläche 21a, welche an einer Unterkante resp. Unterseite 32 des freistehenden Wannenrands 30 befestigt wird, mit Kleber 40 versehen

Das Basisdichtteil 10 kann an der Rückseite, d.h. an der gebäudeseitigen Oberfläche 12 mit einem Kleber, vorzugsweise einem Butylkleber versehen sein. Oder es weist eine haftvermittelnde Struktur, z.B. eine Vlieslage, auf, welche in eine auf der Anschlusswand aufgebrachten Dichtschlämme eingearbeitet werden kann. Auf der Vorderseite, d.h. auf der wannenseitigen Oberfläche 11 des Basisdichtteils 10, weist das Wanneneckdichtelement 1 in der Regel in dem Abschnitt, welcher wannenseitig in Bezug auf das Wannendichtteil 10 ausgebildet ist, einen Kleber 40, vorzugsweise einen Butylkleber, auf. Dieser Abschnitt ist in Fig. 3(d) der nicht schraffierte Bereich. Der schraffierte Abschnitt, auf welchem üblicherweise im Einbauzustand Fliesen angeordnet sind, ist in der Regel mit einer haftvermittelnden Struktur, z.B. einer Vlieslage 41, versehen.

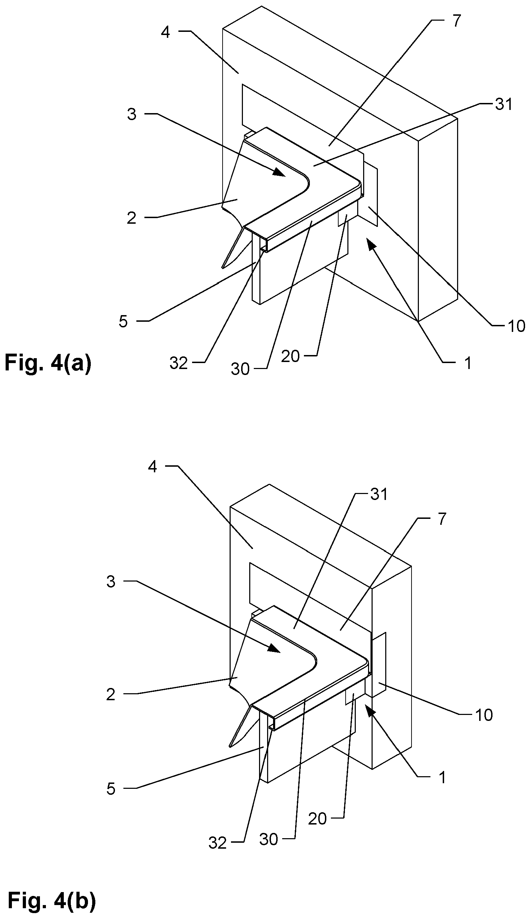

Fig. 4 zeigt unter (a) und (b) das Wanneneckdichtelement 1 in der ersten respektive zweiten Einbausituation wie sie in Fig. 1(a) resp. Fig. 1(b) dargestellt ist. Das Basisdichtteil 10 und/oder das Wannendichtteil 20 können aus einer wasserdichten Folie gefertigt sein, welche teilweise mit einem Vlies kaschiert ist. In der Regel ist das Basisdichtteil 10 und/oder das Wannendichtteil 20 aus derart flexiblem Material gefertigt, so dass es leicht um Ecken gelegt werden kann.

In beiden Einbausituationen ist das Wanneneckdichtelement 1 mit der Oberseite resp. der Wannenranddichtfläche 21a des Wannenrandschenkels 21 an der Unterseite 32 des freistehenden Wannenrands 30 und mit der Wannenträgerdichtfläche 22a des Wannenträgerschenkels 22 mit dem Wannenträger 5 wasserdicht verbunden. Das Wanneneckdichtelement 1 ist derart angeordnet, dass wenigstens Bereiche der wannenseitigen Oberfläche 11 des Basisdichtteils 10 mit dem gebäudeseitigen Wannenrand 31 resp. dem daran befestigten Dicht- und Montageband 7 wasserdicht verbunden ist. Die wasserdichte Verbindung wird in der Regel mit einem Butylkleber 40 erreicht. Die Rückseite, d.h. die gebäudeseitige Oberfläche des Basisdichtteils 10 ist mit der Anschlusswand 4 resp. mit dem Gebäude wasserdicht verbunden. Bei der zweiten Einbausituation in Fig. 4(b) ist im Unterschied zur ersten Einbausituation in Fig. 4(a) Basisdichtteil 10 um eine Ecke der Anschlusswand 4 gelegt.

Fig. 7 und Fig. 8 zeigen jeweils eine perspektivische Ansicht eines weiteren Wanneneckdichtelements 1. Fig. 9 und Fig. 10 zeigen jeweils eine Draufsicht auf eine Wannenseite 11 des Wanneneckdichtelements 1 aus Fig. 7 oder Fig. 8. Im Unterschied zu Fig. 3, weist der Wannenrandschenkel 21 eine L-Form auf, wobei einer erster Abschnitt 21' des Wannenrandschenkels 21 sich auf der der Wannenträgerdichtfläche 22a abgewandten Seite des Wannenträgerschenkels 22 entlang dessen Gesamtlänge erstreckt und wobei sich ein zweiter Abschnitt 21" des Wannenrandschenkels 21 sich auf der Seite der Wannenträgerdichtfläche 22a entlang des Basisdichtteils erstreckt. Dabei ist lediglich die Stirnfläche des zweiten Abschnitts 21" wasserdicht mit dem Basisteil 10 verbunden. Die jeweils der Wanne abgewandten Seiten des ersten Abschnitts des Wannenrandschenkels und des Wannenträgerschenkels schliessen einen rechten Winkel ein. Im Unterschied zum Wanneneckdichtelement 1 aus Fig. 7 weist das Wanneneckdichtelement 1 aus Fig. 8 eine L-Form mit abgeschrägter Ecke auf.

Auf der Vorderseite, d.h. auf der wannenseitigen Oberfläche 11 des Basisdichtteils 10, weist das Wanneneckdichtelement 1 in der Regel in dem Abschnitt, welcher wannenseitig in Bezug auf das Wannendichtteil 10 ausgebildet ist, einen Kleber 40, vorzugsweise einen Butylkleber, auf. Dieser Abschnitt ist in Fig. 10 der nicht schraffierte Bereich. Der schraffierte Abschnitt, auf welchem üblicherweise im Einbauzustand Fliesen angeordnet sind, ist in der Regel mit einer haftvermittelnden Struktur, z.B. einer Vlieslage 41, versehen.

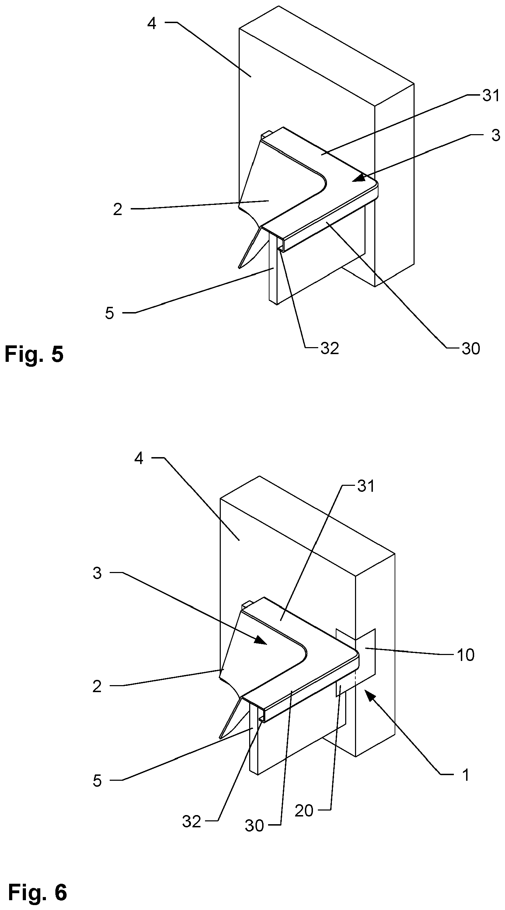

Fig. 6 zeigt die Ausführungsform des Wanneneckdichtelements 1 aus Fig. 7 oder Fig. 8 im Einbauzustand ohne Dicht- und Montageband 7, wobei die Wannenranddichtfläche 21a der beiden Abschnitte des Wannenrandschenkels 21 an der Unterseite 32 des gebäudeseitigen Wannenrands 31 und des freistehenden Wannenrands 30 befestigt ist. Ein Abschnitt des Basisdichtteils 10, welcher nicht mit der Stirnseite des Wannenrandschenkels 21 verbunden ist, ist um eine Ecke der Anschlusswand gelegt und verläuft fluchtend mit dem Wannenträgerschenkel 22.

In den Figuren ist jeweils eine Wanneneckdichtelement mit quadratischem Basisdichtteil gezeigt. Der linke, untere Viertel, wie in den Figuren 3(c), 3(d), 9 und 10 dargestellt, kann hingegen auch weggelassen werden, so dass sich das Basisdichtteil lediglich über die obere Hälfte und den Vierteil rechts unten erstreckt.

### Bezeichnungsliste

- 1: Wanneneckdichtelement
- 2: Bade- oder Duschwannen
- 3: Wannenecke
- 4: Gebäudeteil, Anschlusswand
- 5: Wannenträger, Anschlussfläche eines Wannenträgers
- 6: Fliesen
- 7: Dicht- und Montageband
- 10: Basisdichtteil
- 11: wannenseitige Oberfläche des Basisdichtteils
- 12: gebäudeseitige Oberfläche des Basisdichtteils
- 20: Wannendichtteil
- 21: Wannenrandschenkel
- 21a: Wannenranddichtfläche
- 21': erster Abschnitt von 21
- 21": zweiter Abschnitt von 21
- 22: Wannenträgerschenkel
- 22a: Wannenträgerdichtfläche
- 23, 23': Stirnseite des Wannendichtteils resp. Wannenrand- / Wannenträgerschenkels
- 24: Ecke des Winkelprofilelements
- 30: freistehender Wannenrand
- 31: gebäudeseitiger Wannenrand
- 32: Unterseite / untere Anschlussfläche eines Wannenrands
- 40: Kleber
- 41: Vlieslage

## Patentansprüche

1. Wanneneckdichtelement (1) zur Abdichtung einer Bade- oder Duschwannenecke (3) gegenüber einem Gebäudeteil (4) und einer Anschlussfläche eines Wannenträgers
(5), wobei das Wanneneckdichtelement (1) ein flächiges, wasserdichtes Basisdichtteil (10) und ein wasserdichtes, rechtwinkliges Wannendichtteil (20) umfasst,
wobei das Basisdichtteil (10) eine wannenseitige Oberfläche (11) zur dichten Verbindung mit einer Anschlussfläche einer Bade- oder Duschwanne (2) und eine gebäudeseitige Oberfläche (12) zur dichten Verbindung mit dem Gebäudeteil (4) aufweist;
wobei das Wannendichtteil (20) einen ebenen Wannenrandschenkel (21), der eine Wannenranddichtfläche (21a) zur dichten Verbindung mit einer unteren Anschlussfläche eines Wannenrands (32) aufweist, und einen ebenen Wannenträgerschenkel (22), der eine Wannenträgerdichtfläche (22a) zur dichten Verbindung mit der Anschlussfläche des Wannenträgers (5) aufweist, umfasst;
wobei Wannenrandschenkel (21) und Wannenträgerschenkel (22) wasserdicht miteinander verbunden sind und einen rechten Winkel einschliessen;
wobei eine Stirnseite (23) des Wannenrandschenkels (21) und eine Stirnseite (23') des Wannenträgerschenkels (22) wasserdicht mit der Wannenseite (11) des flächigen Basisdichtteils (10) verbunden sind;
wobei sich das flächige Basisdichtteil (10) in einem ebenen Zustand in Bezug auf eine durch den Wannenrandschenkel (21) und den Wannenträgerschenkel (22) ausgebildete Ecke (24) des Wannendichtteils (20) auf der Seite der Wannenranddichtfläche (21a) des Wannenrandschenkels (21) und auf der entgegengesetzten Seite der Wannenträgerdichtfläche (22a) des Wannenträgerschenkels (22) um eine vorbestimmte Mindestlänge, vorzugsweise um mindestens fünf Zentimeter, erstreckt, **dadurch gekennzeichnet, dass** sich das Basisdichtteil über mindestens drei Viertel resp. 270 Grad in Bezug auf die Ecke (24) des Wannendichtteils (20) erstreckt; und,
wobei der Wannenrandschenkel (21) sich auf der der Wannenträgerdichtfläche (22a) abgewandten Seite des Wannenträgerschenkels (22) entlang dessen Gesamtlänge erstreckt.

2. Wanneneckdichtelement (1) nach Anspruch 1, **dadurch gekennzeichnet, dass** der Wannenrandschenkel (21) L-förmig ausgebildet ist und ein erster Abschnitt des Wannenrandschenkel (21) sich auf der der Wannenträgerdichtfläche (22a) abgewandten Seite des Wannenträgerschenkels (22) entlang dessen Gesamtlänge erstreckt und dass ein zweiter Abschnitt des Wannenrandschenkels (21) sich auf der Seite der Wannenträgerdichtfläche (22a) entlang des Basisdichtteils (10) erstreckt.

3. Wanneneckdichtelement (1) nach einem der vorangehenden Ansprüche, **dadurch gekennzeichnet, dass** der Wannenträgerschenkel (22) Wannendichtteils (20) eine Länge von etwa fünf oder mehr Zentimeter aufweist.

4. Wanneneckdichtelement (1) nach einem der vorangehenden Ansprüche, **dadurch gekennzeichnet, dass** das Wannendichtteil (20) wannenseitig auf der Wannendichtfläche (21a) des Wannenrandschenkels (21) und auf der Wannenträgerdichtfläche (22a) des Wannenträgerschenkels (22) einen Kleber (40), vorzugsweise einen Butylkleber, aufweist.

5. Wanneneckdichtelement (1) nach einem der vorangehenden Ansprüche, **dadurch gekennzeichnet, dass** das Wannendichtteil (20) fliesenseitig kleberfrei ist.

6. Wanneneckdichtelement (1) nach einem der vorangehenden Ansprüche, **dadurch gekennzeichnet, dass** das Wannendichtteil (20) fliesenseitig eine haftvermittelnde Struktur, beispielsweise in Form einer Vlieslage (41), aufweist.

7. Wanneneckdichtelement (1) nach einem der vorangehenden Ansprüche, **dadurch gekennzeichnet, dass** der Wannenrandschenkel (21) eine Breite von mindestens 1,5 Zentimeter aufweist und/oder der Wannenträgerschenkel (22) eine Breite von mindestens fünf Zentimeter aufweist.

8. Wanneneckdichtelement (1) nach einem der vorangehenden Ansprüche, **dadurch gekennzeichnet, dass** das Basisdichtteil (10) an der gebäudeseitigen Oberfläche (12) einen Kleber (40), vorzugsweise einen Butylkleber, aufweist.

9. Wanneneckdichtelement (1) nach einem der vorangehenden Ansprüche, **dadurch gekennzeichnet, dass** das Basisdichtteil (10) auf der wannenseitigen Oberfläche (11) in dem Abschnitt, welcher wannenseitig in Bezug auf das Wannendichtteil (10) ausgebildet ist, einen Kleber (40), vorzugsweise einen Butylkleber, aufweist.

10. Wanneneckdichtelement (1) nach einem der vorangehenden Ansprüche, **dadurch gekennzeichnet, dass** das Basisdichtteil (10) auf der wannenseitigen Oberfläche (11) in dem Abschnitt, welcher fliesenseitig in Bezug auf das Wannendichtteil (20) ausgebildet ist, eine haftvermittelnde Struktur, beispielsweise in Form einer Vlieslage (41), aufweist.

11. Verwendung eines Wanneneckdichtelements (1) nach einem der Ansprüche 1 bis 9, zur Abdichtung einer Bade- oder Duschwannenecke (3) gegenüber einem Gebäudeteil (4) und einem Wannenträger (5).

## Claims

1. Tub corner sealing element (1) for sealing a bath or shower tub corner (3) with respect to a building part (4) and a connecting surface of a tub support (5), wherein the tub corner sealing element (1) comprises a flat, watertight base sealing part (10) and a watertight, right-angled tub sealing part (20),
wherein the base sealing part (10) has a tub-side surface (11) for sealed connection to a connecting surface of a bath or shower tub (2) and a building-side surface (12) for sealed connection to the building part (4);
said tub sealing member (20) comprising a flat tub rim leg (21) having a tub rim sealing surface (21a) for sealingly connecting with a lower connecting surface of a tub rim (32), and a flat tub support leg (22) having a tub support sealing surface (22a) for sealingly connecting with the connecting surface of the tub support (5);
wherein the tub edge leg (21) and the tub support leg (22) are connected to each other in a watertight manner and enclose a right angle;
wherein an end face (23) of the tub edge leg (21) and an end face (23') of the tub support leg (22) are connected in a watertight manner to the tub side (11) of the flat base sealing part (10);
wherein the flat base sealing part (10) extends in a flat state with respect to a corner (24) of the tub sealing part (20) formed by the tub edge leg (21) and the tub support leg (22) on the side of the tub edge sealing surface (21a) of the tub edge leg (21) and on the opposite side of the tub support sealing surface (22a) of the tub support leg (22) by a predetermined minimum length, preferably by at least five centimetres, **characterised in that** the base sealing part extends over at least three quarters resp. 270 degrees with respect to the corner (24) of the tub sealing part (20); and,
wherein the tub edge leg (21) extends on the side of the tub support leg (22) facing away from the tub support sealing surface (22a) along the entire length thereof.

2. The tub corner sealing element (1) according to claim 1, **characterised in that** the tub edge leg (21) is L-shaped and a first portion of the tub edge leg (21) extends on the side of the tub support leg (22) facing away from the tub support sealing surface (22a) along the entire length thereof and that a second portion of the tub edge leg (21) extends on the side of the tub support sealing surface (22a) along the base sealing part (10).

3. The tub corner sealing element (1) according to any one of the preceding claims, **characterized in that** the tub support leg (22) of the tub sealing member (20) has a length of about five or more centimetres.

4. The tub corner sealing element (1) according to one of the preceding claims, **characterised in that** the tub sealing part (20) has an adhesive (40), preferably a butyl adhesive, on the tub side on the tub sealing surface (21a) of the tub edge leg (21) and on the tub support sealing surface (22a) of the tub support leg (22).

5. The tub corner sealing element (1) according to one of the preceding claims, **characterised in that** the tub sealing part (20) is free of adhesive on the tile side.

6. The tub corner sealing element (1) according to one of the preceding claims, **characterised in that** the tub sealing part (20) has an adhesion-promoting structure on the tile side, for example in the form of a fleece layer (41).

7. The tub corner sealing element (1) according to one of the preceding claims, **characterised in that** the tub edge leg (21) has a width of at least 1.5 centimetres and/or the tub support leg (22) has a width of at least five centimetres.

8. The tub corner sealing element (1) according to one of the preceding claims, **characterised in that** the base sealing part (10) has an adhesive (40), preferably a butyl adhesive, on the building-side surface (12).

9. The tub corner sealing element (1) according to one of the preceding claims, **characterized in that** the base sealing part (10) has an adhesive (40), preferably a butyl adhesive, on the tub-side surface (11) in the portion which is formed tub-side with respect to the tub sealing part (10).

10. The tub corner sealing element (1) according to one of the preceding claims, **characterised in that** the base sealing part (10) has an adhesion-promoting structure, for example in the form of a fleece layer (41), on the tub-side surface (11) in the portion which is formed on the tile side in relation to the tub sealing part (20).

11. Use of a bathtub corner sealing element (1) according to one of claims 1 to 9, for sealing a bathtub or shower tub corner (3) with respect to a building part (4) and a tub support (5).

## Revendications

1. Elément d'étanchéité de coin de baignoire (1) pour l'étanchéité d'un coin de baignoire ou de douche (3) par rapport à une partie de bâtiment (4) et une surface de raccordement d'un support de baignoire (5), l'élément d'étanchéité de coin de baignoire (1) comprenant une partie d'étanchéité de base (10) plate et étanche à l'eau et une partie d'étanchéité de baignoire (20) rectangulaire et étanche à l'eau,
la pièce d'étanchéité de base (10) présentant une surface (11) côté baignoire pour la liaison étanche avec une surface de raccordement d'une baignoire ou d'un bac de douche (2) et une surface (12) côté bâtiment pour la liaison étanche avec la partie de bâtiment (4) ;
l'élément d'étanchéité de baignoire (20) comprenant une branche de bord de baignoire plane (21), qui présente une surface d'étanchéité de bord de baignoire (21a) pour une liaison étanche avec une surface de raccordement inférieure d'un bord de baignoire (32), et une branche de support de baignoire plane (22), qui présente une surface d'étanchéité de support de baignoire (22a) pour une liaison étanche avec la surface de raccordement du support de baignoire (5) ;
la branche de bord de baignoire (21) et la branche de support de baignoire (22) étant reliées entre elles de manière étanche à l'eau et formant un angle droit ;
une face frontale (23) de la branche de bord de baignoire (21) et une face frontale (23') de la branche de support de baignoire (22) étant reliées de manière étanche à l'eau à la face de baignoire (11) de la pièce d'étanchéité de base plate (10) ;
l'élément d'étanchéité de base plat (10) s'étendant, dans un état plan, par rapport à un coin (24) de l'élément d'étanchéité de baignoire (20) formé par la branche de bord de baignoire (21) et la branche de support de baignoire (22), sur le côté de la surface d'étanchéité de bord de baignoire (21a) de la branche de bord de baignoire (21) et sur le côté opposé de la surface d'étanchéité de support de baignoire (22a) de la branche de support de baignoire (22), d'une longueur minimale prédéterminée, de préférence d'au moins cinq centimètres, **caractérisé en ce que** l'élément d'étanchéité de base s'étend sur au moins trois quarts, respectivement sur au moins cinq centimètres. 270 degrés par rapport au coin (24) de la partie d'étanchéité de la baignoire (20) ; et,
la branche de bord de baignoire (21) s'étendant sur le côté de la branche de support de baignoire (22) opposé à la surface d'étanchéité de support de baignoire (22a) sur toute la longueur de celle-ci.

2. Elément d'étanchéité de coin de baignoire (1) selon la revendication 1, **caractérisé en ce que** la branche de bord de baignoire (21) est en forme de L et qu'une première section de la branche de bord de baignoire (21) s'étend sur le côté de la branche de support de baignoire (22) opposé à la surface d'étanchéité de support de baignoire (22a) le long de sa longueur totale et qu'une deuxième section de la branche de bord de baignoire (21) s'étend sur le côté de la surface d'étanchéité de support de baignoire (22a) le long de la partie d'étanchéité de base (10).

3. Elément d'étanchéité de coin de baignoire (1) selon l'une des revendications précédentes, **caractérisé en ce que** la branche de support de baignoire (22) de la partie d'étanchéité de baignoire (20) a une longueur d'environ cinq centimètres ou plus.

4. Elément d'étanchéité de coin de baignoire (1) selon l'une des revendications précédentes, **caractérisé en ce que** l'élément d'étanchéité de baignoire (20) présente, du côté de la baignoire, sur la surface d'étanchéité de baignoire (21a) de la branche de bord de baignoire (21) et sur la surface d'étanchéité de support de baignoire (22a) de la branche de support de baignoire (22), une colle (40), de préférence une colle au butyle.

5. Elément d'étanchéité de coin de baignoire (1) selon l'une des revendications précédentes, **caractérisé en ce que** l'élément d'étanchéité de baignoire (20) est exempt de colle du côté du carrelage.

6. Elément d'étanchéité de coin de baignoire (1) selon l'une des revendications précédentes, **caractérisé en ce que** l'élément d'étanchéité de baignoire (20) présente du côté du carrelage une structure favorisant l'adhérence, par exemple sous la forme d'une couche de non-tissé (41).

7. Elément d'étanchéité de coin de baignoire (1) selon l'une des revendications précédentes, **caractérisé en ce que** la branche de bord de baignoire (21) présente une largeur d'au moins 1,5 centimètre et/ou la branche de support de baignoire (22) présente une largeur d'au moins cinq centimètres.

8. Élément d'étanchéité de coin de baignoire (1) selon l'une des revendications précédentes, **caractérisé en ce que** l'élément d'étanchéité de base (10) présente un adhésif (40), de préférence un adhésif au butyle, sur la surface (12) côté bâtiment.

9. Elément d'étanchéité de coin de baignoire (1) selon l'une des revendications précédentes, **caractérisé en ce que** l'élément d'étanchéité de base (10) présente un adhésif (40), de préférence un adhésif butyle, sur la surface côté baignoire (11) dans la section qui est formée côté baignoire par rapport à l'élément d'étanchéité de baignoire (10).

10. Elément d'étanchéité pour coin de baignoire (1) selon l'une des revendications précédentes, **caractérisé en ce que** l'élément d'étanchéité de base (10) présente, sur la surface (11) côté baignoire, dans la section qui est formée côté carrelage par rapport à l'élément d'étanchéité de baignoire (20), une structure favorisant l'adhérence, par exemple sous la forme d'une couche de non-tissé (41).

11. Utilisation d'un élément d'étanchéité de coin de baignoire (1) selon l'une des revendications 1 à 9, pour l'étanchéité d'un coin de baignoire ou de bac à douche (3) par rapport à une partie de bâtiment (4) et à un support de baignoire (5).
